# EUROPÄISCHE PATENTSCHRIFT

(11) **EP 4 452 545 B1**
(45) Veröffentlichungstag und Bekanntmachung des Hinweises auf die Patenterteilung: **08.04.2026**
(21) Anmeldenummer: 22843152.4
(22) Anmeldetag: 20.12.2022
(51) Int. Cl.: B23K 26/10, B23K 26/361, B26D 3/16, B23K 101/12, B23K 103/16

(54) **SCHNEIDVORRICHTUNG UND VERFAHREN ZUM KONFEKTIONIEREN EINES BEHÄLTERS**
CUTTING DEVICE AND METHOD FOR MANUFACTURING A CONTAINER
DISPOSITIF DE DÉCOUPE ET PROCÉDÉ DE FABRICATION D'UN RÉCIPIENT

(30) Priorität: 21.12.2021 CH 0707582021
(43) Veröffentlichungstag der Anmeldung: 30.10.2024
(60) Teilanmeldung: 26161676.7
(73) Patentinhaber: Alpla-Werke Alwin Lehner GMBH & Co.KG, 6971 Hard (AT)
(72) Erfinder: SOHM, Alexander, 6850 Dornbirn (AT); FÄSSLER, Manuel, 6890 Lustenau (AT); SEPPI, Simon, 6845 Hohenems (AT)
(74) Vertreter: Bohest AG Branch Ostschweiz
(86) Internationale Anmeldenummer: PCT/EP2022/086869
(87) Internationale Veröffentlichungsnummer: WO 2023/118058

(56) Entgegenhaltungen:
- EP-A2- 0 154 397
- WO-A1-2006/133044
- DE-A1- 102014 109 550
- DE-U1- 9 217 395

## Beschreibung

Die vorliegende Erfindung betrifft eine Schneidvorrichtung und ein Verfahren zum Konfektionieren eines Behälters gemäss dem Oberbegriff der unabhängigen Ansprüche.

Aus dem Stand der Technik sind unterschiedliche Behälter zur Aufnahme von Flüssigkeit bekannt. So sind beispielsweise Glasflaschen oder Kunststoffflaschen zur Aufnahme von Getränken bekannt geworden. Es wurden ebenfalls bereits Behälter vorgeschlagen, die aus faserbasiertem Material gefertigt sind.

Ein faserbasierter Behälter wurde in der WO 2012/139590 A1 vorgeschlagen. Zur Herstellung dieses Behälters wird sogenannte Pulpe in eine Form eingebracht und mit einem flexiblen Ballon in dieser Form an eine entsprechende Wandung gedrückt und entsprechend komprimiert.

Pulpe ist eine Mischung aus Fasern und Wasser, insbesondere Naturfasern wie Hanffasern, Zellulosefasern oder Flachsfasern oder einer Mischung davon. Gegebenenfalls weist die Pulpe Zusatzstoffe auf, wie beispielsweise aus der WO 2020/070255 A1 bekannt, die beispielsweise ein Aushärten der komprimierten Pulpe verbessern oder Einfluss auf das spätere Aussehen haben oder generell die Eigenschaften der Pulpe oder des späteren Behälters verändern.

Bei diesen Behältern besteht die Gefahr, dass diese durch im Behälter gelagerte Flüssigkeit aufweichen und beispielsweise undicht werden oder dass Stoffe aus dem Behälter in die Flüssigkeit diffundieren.

Es ist vorgeschlagen worden, derartige faserbasierte Behälter mit einer inneren Schicht aus Kunststoff zu versehen, insbesondere innerhalb des faserbasierten Behälters eine Kunststoffflasche anzuordnen, welche entsprechende Barrierefunktionen übernehmen kann. Der faserbasierte Behälter stellt hier also lediglich eine Hülle für einen dünnwandigen Kunststoffbehälter bereit. Eine derartige Kombination ist aus der WO 2018/167192 A1 bekannt geworden.

Sowohl bei faserbasierten Behältern, die in einem weiteren Verfahrensschritt mit einer inneren Schicht aus Kunststoff versehen werden, also bei faserbasierten Hüllen, als auch bei faserbasierten Behältern, die ohne eine derartige Schicht versehen sind ist bekannt, dass während der Produktion gewisse Ungenauigkeiten entstehen können. Da die Behälter und/oder Hüllen in einer Negativform geformt werden, kann in Bezug zu deren Aussenkontur eine sehr hohe Masstreue erreicht werden. Die Innenkontur respektive die innere Oberfläche des Behälters/der Hülle ist, je nach spezifischen Eigenschaften der Pulpe aus der der Behälter/die Hülle geformt wird, unterschiedlich grossen Abweichungen unterworfen. Diese sind typischerweise vernachlässigbar mit Ausnahme von Abweichungen im Bereich einer Öffnung des Behälters, in die später ein Kunststoffbehälter eingebracht wird und/oder an welche ein Behälterverschluss angeordnet wird, beziehungsweise, die als Behälterhals mit entsprechenden Befestigungselementen für einen Behälterverschluss ausgebildet ist. Durch die Materialeigenschaften der Pulpe ist ein oberer, abschliessender Rand der Öffnung grösseren Toleranzen unterworfen und ist regelmässig faserig ausgebildet. Dies ist insbesondere nachteilig da dies eine Schnittstelle zu den bereits erwähnten Kunststoffbehältern und/oder Behälterverschlüssen bildet und diese Schnittstelle massgetreu ausgebildet sein muss.

Verschiedene Versuche wurden unternommen, um diesen Rand der Öffnung zu konfektionieren, beispielsweise durch Abschneiden von überschüssigem Material. Dies hat zu einer Verbesserung geführt und eignet sich beispielsweise für Behälter, in die eine separate innere Hülle beispielsweise in der Form eines Prefoms eingegeben wird. Für faserbasierte Behälter, die einen Hals und daran angeordnete Befestigungselemente zum Zusammenwirken mit einem Behälterverschluss aufweisen, ist dies dennoch zu ungenau. Bei derartigen Behältern muss zwischen der Öffnung und dem Behälterverschluss eine Dichtwirkung gewährleistet werden. Auf dem Gebiet der Kunststoffflaschen wurden Versuche unternommen, Behälter mit einer Laserschneidvorrichtung aufzutrennen, wie beispielsweise in der EP 0 154 397 A2 beschrieben.

Es ist Aufgabe der Erfindung, zumindest einen oder mehrere Nachteile des Standes der Technik zu beheben. Insbesondere soll eine Schneidvorrichtung und/oder ein Verfahren bereitgestellt werden, die es ermöglichen, faserbasierte Behälter massgenau zu konfektionieren und insbesondere einen Schnitt mit hoher Güte bereitzustellen, möglichst unabhängig von Materialabweichungen des Behälters. Dabei soll vorzugsweise auf eine Nachbearbeitung des Schnittes verzichtet werden.

Diese Aufgabe wird durch eine Schneidvorrichtung gemäß Anspruch 1 sowie ein Verfahren gemäß Anspruch 14 gelöst. Weitere Ausführungsformen ergeben sich aus den abhängigen Patentansprüchen.

Eine erfindungsgemässe Schneidvorrichtung zum Konfektionieren eines faserbasierten Behälters weist eine Haltevorrichtung zum Halten des faserbasierten Behälters auf. Sie weist zudem einen Schneidlaser zur Erzeugung eines Laserstrahls auf, wobei der Laserstrahl des Schneidlasers und der faserbasierte Behälter zum Abtrennen eines überschüssigen Überstandes des faserbasierten Behälters mittels des Laserstrahl relativ zueinander bewegbar sind.

Der faserbasierte Behälter ist vorzugsweise eine Getränkeflasche.

Durch das Bereitstellen eines Lasers, beziehungsweise eines Laserstrahls, zum Abtrennen des Überstandes kann eine sehr genaue Schneidkante gebildet werden.

Das relative Bewegen des Laserstrahls in Bezug zum faserbasierten Behälter ermöglicht es, den Laserstrahl in einem gleichbleibenden Abstand in Bezug zur Oberfläche des abzutrennenden Überstandes zu bewegen und zudem einen spezifischen Winkel des Laserstrahls in Bezug zur Oberfläche einzuhalten. Mit anderen Worten erlaubt es diese Konfiguration, einen Winkel der Schnittkante entlang der Oberfläche über den ganzen Verlauf der Schnittkante gleich zu halten. Dies führt zudem zu einer sehr ebenen Schnittkannte. Eine Welligkeit der Schnittkante kann verhindert werden.

Bei der relativen Bewegung handelt es sich vorzugsweise um eine rotative Bewegung des Laserstrahls in Bezug zum Behälter, also um eine Bewegung des Laserstrahls in Umfangsrichtung des Behälters.

Dabei kann vorgesehen sein, dass die Schneidvorrichtung ein Drehlager aufweist, wobei an dem Drehlager eine Umlenkeinrichtung zum Führen des Laserstrahls angeordnet ist. Die Umlenkeinrichtung ist vorzugsweise um eine Längsachse des faserbasierten Behälters rotierbar.

Die Längsachse eines faserbasierten Behälters ist definiert durch seine Erstreckung vom Boden des Behälters bis zur Öffnung des Behälters. Der Boden des Behälters bildet eine Standfläche des Behälters. Die Längsachse entspricht typischerweise auch der Ausgiessrichtung und bei rotationssymmetrischen Flaschen der Rotationsachse.

Mit anderen Worten dreht sich ein am Drehlager befestigtes Element um die zentrale Achse oder Mittelachse einer Flasche, respektive eines faserbasierten Behälters, gegebenenfalls bei dezentraler Öffnung an der Flasche um die Mittelachse der Öffnung.

Insbesondere bei rotationssymmetrischen Behältern erleichtert eine derartige Anordnung das Führen des Laserstrahls und das Einhalten eines spezifischen Abstandes zur Oberfläche des abzutrennenden Überstandes.

Die Umlenkeinrichtung ermöglicht es zudem, den Laserstrahl in eine bestimmte Bahn zu lenken und/oder um Hindernisse zu führen, die gegebenenfalls in einer direkten Bahn des Laserstrahls sind.

Durch die Umlenkeinrichtung ist es insbesondere möglich, den Laserstrahl beispielsweise in Richtung der Längsachse zentral einzuleiten und derart umzulenken, dass er im Wesentlichen rechtwinklig oder auf Wunsch in einem beliebigen Winkel - mit einer Genauigkeit von +/-1° oder weniger zur Längsachse - auf die Oberfläche des abzutrennenden Überstandes auftrifft.

Die Schneidvorrichtung kann eine Fokussieroptik zum Fokussieren des Laserstrahls aufweisen. Diese Fokussieroptik ist insbesondere ein integraler Bestandteil der Umlenkeinrichtung.

Die Fokussieroptik ermöglicht es, den Laserstrahl genau auf eine Oberfläche des abzutrennenden Überstandes auszurichten, mit anderen Worten, einen Brennpunkt des Laserstrahls zur Verfügung zu stellen, der einen spezifischen Abstand zur Oberfläche des abzutrennenden Überstandes aufweist. Dieser Abstand ist bei geringen Wandstärken von vorzugsweise weniger als 1 mm nicht vorhanden, also 0 mm. Bei dicken Wandstärken kann der Abstand negativ sein, mit anderen Worten liegt der Brennpunkt dann innerhalb der Wandstärke.

Durch eine derartige Anordnung kann ein gleichmässiger und sauberer Schnitt erzeugt werden. Zudem ist gewährleistet, dass der Laserstrahl lediglich in seinem Brennpunkt seine maximale Kraft aufweist und dazu beabstandet für umgebende Elemente ungefährlich ist.

Durch die Ausbildung der Fokussieroptik als integraler Bestandteil der Umlenkeinrichtung kann diese gemeinsam mit der Umlenkeinrichtung bewegt werden und entsprechend gemeinsam mit der Umlenkeinrichtung am Drehlager befestigt werden, sodass die Fokussieroptik auf einer Kreisbahn um den faserbasierten Behälter bewegt werden kann.

Die Fokussieroptik kann im Wesentlichen in einem Winkel von 85° bis 95°, insbesondere in einem Winkel von 89° bis 91°, vorzugsweise senkrecht zur Längsachse, und radial beabstandet dazu angeordnet sein.

Dies führt dazu, dass die Fokussieroptik im Wesentlichen senkrecht und mit gleichbleibendem Abstand zu einer Oberfläche eines abzutrennenden Überstandes angeordnet ist, sofern dieser im Wesentlichen zylindrisch ausgebildet ist.

Alternative Anordnungen, sodass der Laserstrahl schräg ausgerichtet ist, sind ebenfalls möglich. Dies kann zu einer beispielsweise nach innen oder aussen geneigten Schnittkante führen, sofern dies gewünscht ist.

Ein radialer Abstand der Fokussieroptik zur Längsachse ist vorzugsweise einstellbar, insbesondere kontinuierlich einstellbar.

Dies ermöglicht auch das Bearbeiten von Behältern die im Bereich des abzutrennenden Überstandes keinen rotationssymmetrischen Querschnitt aufweisen, sondern beispielsweise einen ovalen oder polygonalen Querschnitt.

Während der rotatorischen Bewegung der Umlenkeinrichtung kann also der Abstand der Fokussieroptik eingestellt werden, sodass anstelle einer Kreisbahn auch beispielsweise eine elliptische Bahn möglich ist.

Dabei ist es vorstellbar, dass ein entsprechendes, vorab erfasstes Profil, der Schneidvorrichtung übergeben wird, sodass über den Verlauf des Schnittes eine radiale Einstellung der Fokussieroptik kontinuierlich und entsprechend dem Profil angepasst wird. So kann eine kontinuierliche Verstellung des radialen Abstandes gewährleistet werden, welche es ermöglicht, dass ein Abstand der Fokussieroptik und damit des Brennpunktes des Laserstrahls zur Oberfläche des abzutrennenden Überstandes über den gesamten Schnittverlauf gleich bleibt.

Es wäre ebenfalls vorstellbar, dass beispielsweise bei unebenen oder unbekannten Verläufen der Oberfläche diese quasi in Echtzeit vermessen wird und der radiale Abstand der Fokussieroptik fortlaufend eingestellt wird.

Die Schneidvorrichtung kann eine Austrittsdüse aufweisen durch die der Laserstrahl geführt ist.

Dies schützt einerseits den Laserstrahl, andererseits ermöglicht eine Austrittsdüse auch das Einbringen beispielsweise eines Prozessgases.

Die Umlenkeinrichtung der Schneidvorrichtung kann mehrere Umlenkspiegel aufweisen. Durch Umlenkspiegel ist das einfache Umlenken des Laserstrahls ermöglicht.

Die Umlenkeinrichtung weist vorzugsweise in Einstrahlrichtung nachfolgend zu jedem Umlenkspiegel ein Sicherheitselement auf beziehungsweise ist ein Sicherheitselement an entsprechender Stelle angeordnet.

Damit ist ein unkontrolliertes Ausbrechen des Laserstrahls verhindert, wenn beispielsweise einer der Umlenkspiegel versagt, beispielsweise bricht.

Die Sicherheitselemente können beispielsweise als Metallplatten, insbesondere als Stahlplatten ausgebildet sein.

Die Umlenkeinrichtung ist vorzugsweise als ein im Wesentlichen geschlossenes System aus einzelnen Rohren ausgebildet. Durch die Ausbildung aus Rohren ist das Innere der Umlenkeinrichtung gegenüber der Aussenwelt zumindest teilweise abgeschirmt und ein Eindringen von Staub oder Fremdkörpern in den Strahlengang des Laserstrahls kann zuverlässig verhindert werden.

Es ist vorgesehen, dass an der Schneidvorrichtung, insbesondere am Drehlager, eine erste Absaugeinrichtung zum Absaugen von Dämpfen und/oder Schmutz angeordnet ist, wobei die erste Absaugeinrichtung insbesondere im Bereich der Austrittsdüse endet.

Schmutz, Staub oder Partikel, die sich während des Schneidvorgangs bilden, können somit abgesaugt werden. Ebenfalls Dämpfe, die unter Umständen eine gesundheitsschädigende Wirkung haben können, können somit abgesaugt werden.

Es kann vorgesehen sein, dass an der Schneidvorrichtung, insbesondere am Drehlager, eine Spüleinrichtung zum Spülen des Innenraums oder des Innern des Behälters mit einem Spülgas angeordnet ist.

Während des Betriebs trifft der Laserstrahl typischerweise von aussen auf die Oberfläche des abzutrennenden Überstandes auf. Schmutz oder Partikel, die beim Schneidvorgang entstehen, werden damit in Richtung des Innenraums des faserbasierten Behälters befördert. Durch das Einbringen von Spülgas in den Innenraum des Behälters kann dem entgegengewirkt werden und die sich bildenden Partikel aus dem Behälter geblasen werden.

Zusätzlich ist vorgesehen, dass die Schneidvorrichtung eine zweite Absaugeinrichtung zum Absaugen des Spülgases aus dem Innenraum des Behälters aufweist. Vorzugsweise ist die zweite Absaugeinrichtung insbesondere als Bestandteil der Spüleinrichtung ausgebildet.

Die von dem Spülgas aus dem Innenraum des Behälters beförderten Partikel oder Gase können entsprechend mit der zweiten Absaugeinrichtung direkt abgesaugt werden. Durch das Bereitstellen einer zweiten Absaugeinrichtung ist auch die Bildung spezifischer Strömungsverhältnisse im Innenraum des Behälters begünstigt.

Die Ausbildung als integraler Bestandteil der Spüleinrichtung ermöglicht es, diese gemeinsam mit der Spüleinrichtung in den Innenraum des Behälters zu bewegen, beziehungsweise aus dem Innenraum des Behälters zu entfernen, nachdem der Schneidvorgang abgeschlossen ist.

Die Haltevorrichtung zum Halten des faserbasierten Behälters kann zwei Greifer aufweisen. Entsprechend kann der faserbasierte Behälter symmetrisch von zwei Seiten gehalten werden.

Die Umlenkeinrichtung ist vorzugsweise entlang der Längsachse vertikal verstellbar. Diese Ausbildung ermöglicht es, den faserbasierten Behälter statisch an einem bestimmten Ort zu halten und zum Bearbeiten, also zum Abtrennen des Überstandes, die Umlenkeinrichtung an die entsprechende Position zu führen, ohne dass der in der Haltevorrichtung fixierte Behälter, beziehungsweise dessen Position, justiert werden muss.

Ein weiterer Aspekt betrifft ein Verfahren zum Konfektionieren eines faserbasierten Behälters mit einer Schneidvorrichtung, insbesondere mit einer Schneidvorrichtung wie vorliegend beschrieben. Das Verfahren umfasst die Schritte:
- Bereitstellen eines faserbasierten Behälters in einer Haltevorrichtung,
- Bereitstellen eines Laserstrahls eines Schneidlasers
- Abtrennen eines überschüssigen Überstandes des faserbasierten Behälters mittels des Laserstrahls
wobei zum Abtrennen des überschüssigen Überstandes der faserbasierte Behälter und der Laserstrahl relativ zueinander bewegt werden.

Das relative Bewegen des Laserstrahls in Bezug zum faserbasierten Behälter ermöglicht es, den Laserstrahl in einem gleichbleibenden Abstand in Bezug zur Oberfläche des abzutrennenden Überstandes zu bewegen und zudem einen spezifischen Winkel des Laserstrahls in Bezug zur Oberfläche einzuhalten.

Es kann vorgesehen sein, dass der Laserstrahl in einer Umlenkeinrichtung geführt ist und diese Umlenkeinrichtung zum Abtrennen des überschüssigen Überstandes um eine Längsachse des faserbasierten Behälters rotiert wird, um die relative Bewegung zu erzeugen.

Durch einen derartigen Verfahrensschritt kann ein einfacher Verfahrensablauf bereitgestellt werden, der genau einstellbar ist und reproduzierbar ist.

Der Laserstrahl kann mittels einer Fokussieroptik auf eine Oberfläche des abzutrennenden überschüssigen Überstandes fokussiert werden, beziehungsweise kann der Fokus des Laserstrahls auf einen bestimmten Abstand zu Oberfläche eingestellt werden. Dieser kann Null sein oder auch negativ, sodass der Brennpunkt innerhalb der Materialstärke zu liegen kommt.

Durch eine derartige Fokussieroptik und eine entsprechende Fokussierung kann ein sauberer Schnitt ermöglicht werden.

Zum Ausführen des Schnittes wird der Laserstrahl in Richtung der Längsachse oberhalb einer finalen Schnittfläche positioniert und aktiviert. Dabei weist der Laserschnitt bis zu einer Schnittposition der finalen Schnittfläche eine vertikale Bewegungskomponente auf.

Insbesondere ist dieser vertikalen Bewegungskomponente ebenfalls eine in Umfangsrichtung des faserbasierten Behälters gerichtete Bewegungskomponente überlagert, sodass ein im Wesentlichen schleifender Schnitt entsteht.

Durch die Positionierung und Aktivierung des Laserstrahls oberhalb der finalen Schnittfläche können Fehlstellen, die beim Aktivieren des Laserstrahls entstehen, verhindert werden. Typischerweise wird beim ersten Durchschiessen des Laserstrahls durch das zu trennende Objekt mehr Energie eingebracht und eine punktuelle Verbrennung des zu trennenden Objekts ist die Folge. Durch die Positionierung des Laserstrahls oberhalb der finalen Schnittfläche ist diese punktuelle Verbrennung nicht im Bereich der finalen Schnittfläche.

Vorzugsweise wird nach dem Abschluss des Schnittes der finalen Schnittfläche der Laserstrahl vor dem Deaktivieren des Laserstrahls in Richtung der Längsachse über die finale Schnittfläche bewegt. Dabei weist der Laserschnitt bis zur finalen Position, in welcher der Laserstrahl deaktiviert wird, eine vertikale Bewegungskomponente auf.

Gleichermassen wie beim Beginn des Schnittes findet auch am Ende des Schnittes unter Umständen ein erhöhter Energieeintrag statt und es entstehen Verbrennungsmarken. Durch die vertikale Bewegungskomponente kann die Verbrennungsmarke von der finalen Schnittfläche ferngehalten werden.

Vorzugsweise weist auch hier die vertikale Bewegungskomponente eine überlagerte in Umfangsrichtung des faserbasierten Behälters gerichtete Bewegungskomponente auf. Es entsteht auch hier ein schleifender Schnitt.

Sowohl das Einschalten als auch das Ausschalten des Laserstrahls kann erfolgen, während sich der Laser nach unten bzw. nach oben bewegt und der Behälter sowie der Laserstrahl zusätzlich bereits die in Umfangsrichtung des faserbasierten Behälters gerichtete Bewegungskomponente aufweisen. Dies verringert zudem die Gefahr oder zumindest die Grösse einer punktuellen Verbrennung.

Vorzugsweise wird ein radialer Abstand einer Fokussieroptik zu der Längsachse gemäss einem behälterspezifischen Parameter initial eingestellt. Dies gewährleistet, dass ein Brennpunkt des Laserstrahls immer im gewünschten Abstand zur Oberfläche des abzutrennenden Überstandes ist und damit eine Schnittfläche mit entsprechend hoher Güte entsteht.

Der behälterspezifische Parameter kann für jeden faserbasierten Behälter individuell ermittelt werden. Dabei ist es vorstellbar, dass jeder Behälter vor dem Schneidvorgang ausgemessen wird und die entsprechenden Daten der Schneidvorrichtung übergeben werden und diese entsprechend mit einer statischen Einstellung den Schnitt durchführt.

Dieser Parameter kann beispielsweise auch für ganze Chargen eingestellt werden, wenn beispielsweise diese in einem engen Toleranzfeld gefertigt sind.

Mit anderen Worten kann ein vorab erfasstes Profil der Schneidvorrichtung übergeben werden, sodass über den Verlauf des Schnittes eine radiale Einstellung der Fokussieroptik kontinuierlich und entsprechend dem Profil angepasst werden kann.

Es ist jedoch auch vorstellbar, dass der radiale Abstand während des Abtrennvorgangs oder des Schneidvorgangs fortlaufend an eine Kontur des faserbasierten Behälters angepasst wird.

So kann eine kontinuierliche Verstellung des radialen Abstandes gewährleistet werden, welche es ermöglicht, dass ein Abstand der Fokussieroptik und damit des Brennpunktes des Laserstrahls zur Oberfläche des abzutrennenden Überstandes über den gesamten Schnittverlauf gleich bleibt.

Es wäre ebenfalls vorstellbar, dass beispielsweise bei unebenen oder unbekannten Verläufen der Oberfläche diese quasi in Echtzeit vermessen wird und der radiale Abstand der Fokussieroptik fortlaufend eingestellt wird.

Zur Erhöhung der Qualität der Schnittkante kann während des Abtrennvorgangs mittels einer Spüleinrichtung Spülgas in den faserbasierten Behälter eingeblasen werden. Durch ein derartiges Einblasen von Spülgas können Schmutz und Partikel, die beim Schneidvorgang entstehen, aus dem Innern des Behälters herausgeblasen werden, beziehungsweise sind daran gehindert, sich im Inneren des Behälters niederzuschlagen.

Zusätzlich oder alternativ kann vorgesehen sein, dass während des Abtrennvorgangs Abluft aus dem faserbasierten Behälter, insbesondere aus dem Innern des faserbasierten Behälters, mit einer zweiten Absaugeinrichtung und/oder aus dem Bereich einer Austrittsdüse mit einer ersten Absaugeinrichtung abgesaugt wird.

Dies trägt zu einer Erhöhung der Schnittqualität bei und eine nachträgliche Reinigung der Schnittkante kann unterbleiben.

Zusätzlich oder alternativ kann vorgesehen sein, dass während des Abtrennvorgangs die Umlenkeinrichtung mit Spülgas beaufschlagt wird.

Dies verhindert einerseits, dass sich Staub oder Schmutzpartikel in der Umlenkeinrichtung und insbesondere auf darin oder daran angeordneten Umlenkspiegeln niederschlagen und/oder festsetzen, andererseits kann durch die Beaufschlagung der Umlenkeinrichtung mit Spülgas an einer Austrittsdüse ein Schutzgasstrom erzeugt werden, der im Bereich des Schnittes einen Schutz von äusseren Einflüssen bildet. Ein derartiger Schutzgasstrom kann insbesondere das Eintreten von Schmutz oder Staubpartikeln in den Laserstrahl verhindern.

Nach dem Abtrennvorgangs kann der abgetrennte überschüssige Überstand von der Schneidvorrichtung mittels eines Abstreifrings von der Schneidvorrichtung abgestreift werden.

Der überschüssige Überstand kann damit zielgerichtet der Entsorgung zugeführt werden, beispielsweise in Richtung eines separat angeordneten Trichters oder Behälters befördert werden.

Anhand von Figuren wird nachfolgend die Erfindung erläutert. Es zeigt:
- Figur 1:: Eine perspektivische Darstellung einer Schneidvorrichtung;
- Figur 2:: eine Schnittansicht durch die Schneidvorrichtung gemäss der Figur 1;
- Figur 3:: eine Detailansicht aus der Figur 2;
- Figur 4:: eine perspektivische Ansicht eines faserbasierten Behälters.

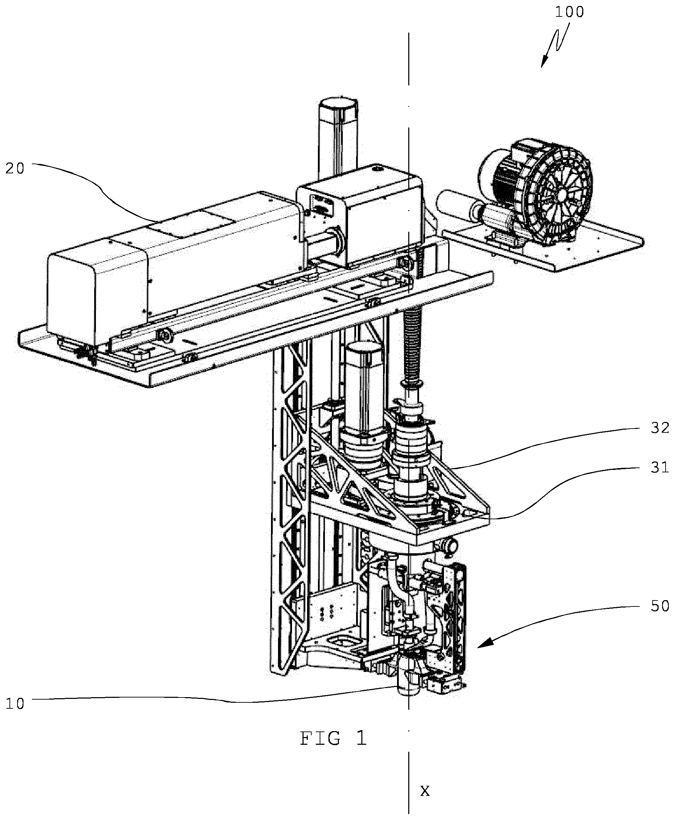

Die Figur 1 zeigt eine perspektivische Darstellung einer Schneidvorrichtung 100. Die Schneidvorrichtung 100 umfasst eine Haltevorrichtung 50 zum Halten eines faserbasierten Behälters 10. Die Schneidvorrichtung 100 umfasst zudem einen Schneidlaser 20 der vorliegend ortsfest an der Schneidvorrichtung 100 angeordnet ist. Oberhalb des faserbasierten Behälters 10 ist ein Support 32 angeordnet, auf dem ein Drehlager 31 angeordnet ist. Der Support 32 ist vertikal entlang der Längsachse X verschiebbar. Die Längsachse X entspricht im Wesentlichen einer Längsachse durch den faserbasierten Behälter 10 und bei einem rotationssymmetrischen faserbasierten Behälter 10, wie vorliegend gezeigt, entspricht die Längsachse X der Rotationsachse.

Der besseren Übersichtlichkeit halber sind Zuführvorrichtungen zum Zuführen der faserbasierten Behälter 10 und zum Wegführen der faserbasierten Behälter 10 nicht dargestellt.

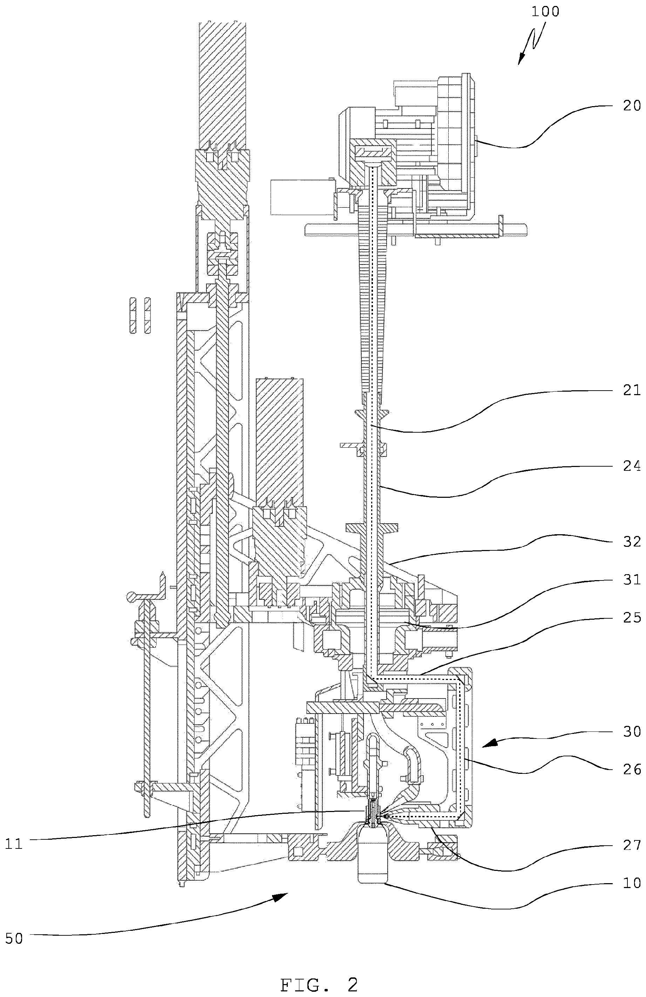

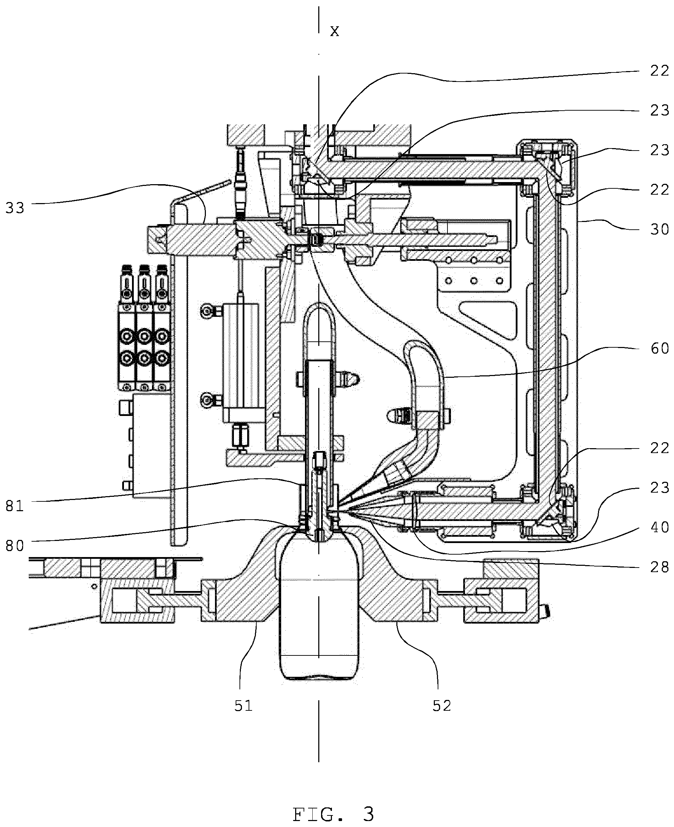

Die Figur 2 zeigt eine Schnittansicht durch die Schneidvorrichtung 100 gemäss der Figur 1. Der Schnitt erstreckt sich quer zur Längsausdehnung des Lasers 20 durch die Längsachse X. Im in der Figur 2 unteren Bereich der Schneidvorrichtung 100 ist die Haltevorrichtung 50 angeordnet mittels derer ein faserbasierter Behälter 10 in der Schneidvorrichtung 100 gehalten wird. Oberhalb der Haltevorrichtung 50 ist ein vertikal verschiebbarer Support 32 angeordnet auf dem ein Drehlager 31 angeordnet ist. Am Drehlager 31 angeordnet ist eine Umlenkeinrichtung 30 zum Führen des Laserstrahls 21. Der Laserstrahl 21 wird mittels des Lasers 20 erzeugt. Der Laserstrahl 21 wird derart erzeugt, dass er im Wesentlichen ausgangsseitig des Lasers 20 in Richtung der Längsachse X strahlt. Der Laserstrahl 21 wird mittels der Umlenkeinrichtung 30 umgelenkt, sodass er im Wesentlichen rechtwinklig auf den faserbasierten Behälter 10 gerichtet ist. Dies wird nachfolgend im Bezug zur Figur 3 im Detail erläutert. Das Drehlager 31 ist derart angeordnet, dass die Umlenkeinrichtung 30 um die Längsachse X bewegbar ist, wobei die Längsachse X und das Zentrum der Rotation im Wesentlichen übereinanderliegen. Die Umlenkeinrichtung 30 umfasst vorliegend einzelne Rohre 24, 25, 26 und 27, die jeweils in einem Winkel zueinander angeordnet sind. An den jeweiligen Schnittstellen der einzelnen Rohre 24, 25, 26 und 27 sind innerhalb der Rohre 24, 25, 26 und 27 Umlenkspiegel 23 zum Umlenken des Laserstrahls 21 angeordnet. Deren Funktion wird nachfolgend im Bezug zur Figur 3 erläutert. Das Rohr 24 der Umlenkeinrichtung 30 ist in seiner Länge grössenveränderlich, sodass der Support 32 gemeinsam mit dem Drehlager 31 und den restlichen Elementen der Umlenkeinrichtung 30 vertikal bewegt werden kann. Auch das Rohr 25 der Umlenkeinrichtung 30 ist in seiner Länge veränderlich, sodass ein radialer Abstand der Rohre 26 und 27 in Bezug auf Längsachse X einstellbar ist.

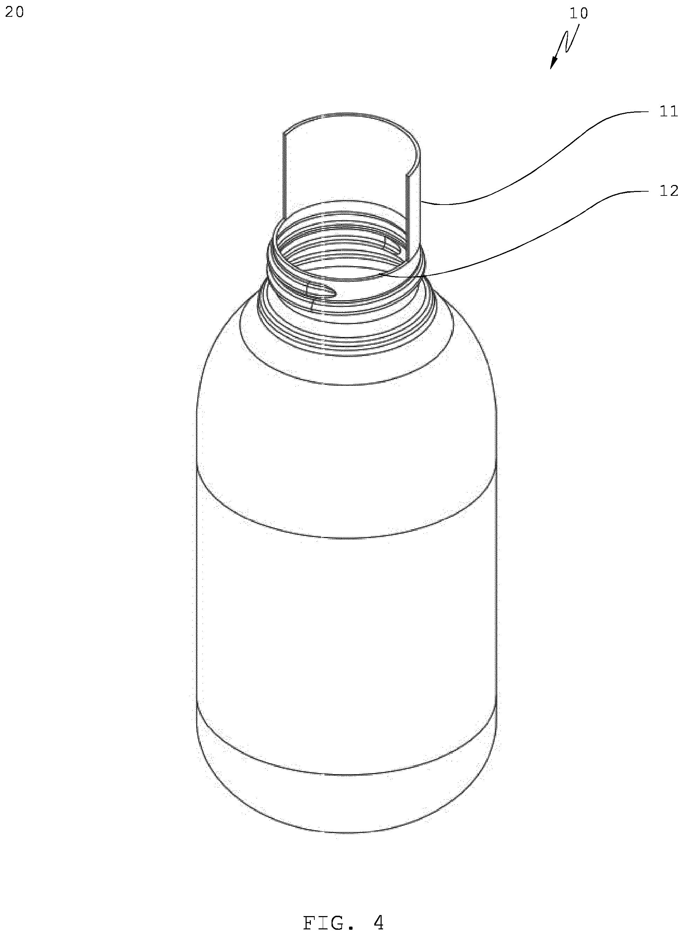

Die Figur 3 zeigt eine Detailansicht der Figur 2. Wie ersichtlich ist, sind in der Umlenkeinrichtung 30 mehrere Umlenkspiegel 22 angeordnet. In Richtung des Laserstrahls nachfolgend, also in Einstrahlrichtung nachfolgend, ist zu jedem Umlenkspiegel 22 ein Sicherheitselement 23 angeordnet, dass vorliegend als eine Metallplatte ausgebildet ist. An der Umlenkeinrichtung 30 weiter angeordnet ist eine Fokussieroptik 40 zum Fokussieren des Laserstrahls und in Strahlrichtung nachfolgend eine Austrittsdüse 28. Wie zur Figur 2 erläutert, ist der radiale Abstand der Umlenkeinrichtung, beziehungsweise der Elemente der Umlenkeinrichtung nachfolgend zum Drehlager 31, einstellbar. Dazu ist unterhalb des Drehlagers 31 ein Aktuator 33 angeordnet. Durch betätigen des Aktuators 33 kann der Abstand der Fokussieroptik 40 zur Längsachse X eingestellt werden. Dies ermöglicht damit das Einstellen eines Abstandes des Brennpunktes des Laserstrahls 21 in Bezug zur Oberfläche des abzutrennenden Überstandes 11 (siehe dazu Figur 4).

Die Umlenkeinrichtung 30 bildet vorliegend ein im Wesentlichen geschlossenes System in welches ein Spülgas eingeführt werden kann, das während des Betriebs durch die Austrittsdüse 28 strömt. Ersichtlich in der Darstellung gemäss der Figur 3 ist ebenfalls die Haltevorrichtung 50. Diese weist zwei Greifer 51 und 52 auf, die einen faserbasierten Behälter 10 von zwei Seiten halten. In den faserbasierten Behälter 10 ist eine Spüleinrichtung 80 eingeführt, durch die ein Spülgas in den Innenraum des faserbasierten Behälters 10 eingebracht werden kann. Während des Betriebs, beziehungsweise während des Schneidvorgangs, kann durch das Einbringen von Spülgas ein Festsetzen von Schmutz oder Staubpartikeln innerhalb des faserbasierten Behälters 10 verhindert werden. Integral in der Spüleinrichtung 80 ausgebildet ist eine zweite Absaugeinrichtung 31, die oberhalb des faserbasierten Behälters 10, beziehungsweise oberhalb einer Öffnung des faserbasierten Behälters 10, das in den faserbasierten Behälter 10 eingebrachte Spülgas gemeinsam mit eventuell darin enthaltenen Schmutzpartikeln absaugt. Eine erste Absaugeinrichtung 60 ist ausserhalb des faserbasierten Behälters 10 angeordnet, und zwar im Bereich der Austrittsdüse 28. Die erste Absaugeinrichtung 60 saugt einerseits Schmutz und Staubpartikel ab, die sich ausserhalb des faserbasierten Behälters 10 bilden, andererseits kann zumindest ein Teil des Spülgases aus der Umlenkeinrichtung 30 wieder aufgefangen werden.

Die Darstellung gemäss der Figur 3 zeigt die Schneidvorrichtung 100 während des Betriebs. Bevor dieser Zustand erreicht wird, ist sowohl die Umlenkeinrichtung 30 als auch die erste Absaugeinrichtung 60 und die Spüleinrichtung 80 vertikal oberhalb des faserbasierten Behälters 10 angeordnet. Alle diese Elemente sind gemeinsam am Drehlager 31 befestigt und können mit dem Support 32 vertikal bewegt werden.

Um einen überschüssigen Überstand 11 des faserbasierten Behälters 10 (siehe dazu Figur 4) abzutrennen, werden diese vorgenannten Elemente in vertikaler Richtung in Richtung des faserbasierten Behälters 10 verfahren, wobei während des vertikalen Verfahrens das Drehlager 31 gemeinsam mit der Umlenkeinrichtung 30 und sämtlichen an dem Drehlager 31 angeordneten Elementen anfängt, um die Längsachse X zu rotieren. Ebenfalls wird bereits zu diesem Zeitpunkt der Laser hochgefahren, sodass dieser während des vertikalen Verschiebevorgangs und ebenfalls während der Rotation bereits seine voreingestellte Leistung erreicht und den faserbasierten Behälter 10 oberhalb der finalen Schnittkante 12 (siehe dazu Figur 4) durchschiesst.

Nach dem Erreichen der finalen vertikalen Position wird das Drehlager 31 um weitere 360° bewegt und im Anschluss der Support 32 wieder in vertikaler Richtung nach oben bewegt und der Laser 20 im Anschluss abgestellt.

In der Figur 3 ist der Austrittsdüse 28 gegenüberliegend ebenfalls ein Schutzblech gezeigt, dass im Versagensfall das unkontrollierte Ausbreiten des Laserstrahls verhindert.

Die Figur 4 zeigt eine perspektivische Ansicht eines faserbasierten Behälters 10. Im oberen Bereich, also im Bereich des Halses, ist der faserbasierte Behälter 10 geschnitten dargestellt, sodass der Blick frei wird auf die Schnittkante 12. Der Schnitt erstreckt sich also lediglich durch den überschüssigen Überstand 11. Die Schnittkante 12 bildet nach dem Schneidvorgang eine finale Oberkante oder obere Öffnung des faserbasierten Behälters 10, auf die ein entsprechender Deckel aufgebracht werden kann.

Nach dieser Bearbeitung wird der faserbasierte Behälter 10, der nun konfektioniert ist, weiteren Bearbeitungsschritten zugeführt. So kann beispielsweise in einem nachfolgenden Schritt das Innere des faserbasierten Behälters 10 beschichtet werden und/oder der faserbasierte Behälter 10 einer Abfüllanlage zugeführt werden.

## Patentansprüche

1. Schneidvorrichtung (100) zum Konfektionieren eines faserbasierten Behälters (10), wobei die Schneidvorrichtung (100) eine Haltevorrichtung (50) zum Halten des faserbasierten Behälters (10) aufweist und einen Schneidlaser (20) zur Erzeugung eines Laserstrahls (21) aufweist, wobei der Laserstrahl (21) des Schneidlasers (20) und der faserbasierte Behälter (10) zum Abtrennen eines überschüssigen Überstandes (11) des faserbasierten Behälters (10) mittels des Laserstrahls (21) relativ zueinander bewegbar sind, wobei an der Schneidvorrichtung (100) eine erste Absaugeinrichtung (60) zum Absaugen von Dämpfen und/oder Schmutz angeordnet ist, **dadurch gekennzeichnet, dass** die Schneidvorrichtung (100) eine zweite Absaugeinrichtung (81) zum Absaugen eines Spülgases aus einem Innenraum des faserbasierten Behälters (10) aufweist.

2. Schneidvorrichtung (100) nach Anspruch 1, **dadurch gekennzeichnet, dass** die Schneidvorrichtung (100) ein Drehlager (31) aufweist, wobei an dem Drehlager (31) eine Umlenkeinrichtung (30) zum Führen des Laserstrahls (21) angeordnet ist, sodass die Umlenkeinrichtung (30) um eine Längsachse (X) des faserbasierten Behälters (10) rotierbar ist.

3. Schneidvorrichtung (100) nach einem der Ansprüche 1 oder 2, **dadurch gekennzeichnet, dass** die Schneidvorrichtung (100) eine Fokussieroptik (40) zum Fokussieren des Laserstrahls (21) aufweist, wobei diese Fokussieroptik (40) insbesondere ein integraler Bestandteil der Umlenkeinrichtung (30) ist.

4. Schneidvorrichtung (100) nach Anspruch 3, **dadurch gekennzeichnet, dass** die Fokussieroptik (40) in einem Winkel von 85° bis 95°, insbesondere in einem Winkel von 89° bis 91°, vorzugsweise senkrecht zur Längsachse (X), und radial beabstandet dazu angeordnet ist.

5. Schneidvorrichtung (100) nach Anspruch 4, **dadurch gekennzeichnet, dass** ein radialer Abstand der Fokussieroptik (40) zur Längsachse (X) einstellbar, insbesondere kontinuierlich einstellbar, ist.

6. Schneidvorrichtung (100) nach einem der Ansprüche 2 bis 5, **dadurch gekennzeichnet, dass** der Laserstrahl (21) durch eine Austrittsdüse (28) geführt ist.

7. Schneidvorrichtung (100) nach einem der Ansprüche 2 bis 6, **dadurch gekennzeichnet, dass** die Umlenkeinrichtung (30) mehrere Umlenkspiegel (22) aufweist, wobei in Einstrahlrichtung nachfolgend zum jedem Umlenkspiegel (22) ein Sicherheitselement (23) angeordnet ist.

8. Schneidvorrichtung (100) nach einem der Ansprüche 2 bis 7, **dadurch gekennzeichnet, dass** die Umlenkeinrichtung (30) als ein im Wesentlichen geschlossenes System aus einzelnen Rohren (24, 25, 26, 27) ausgebildet ist.

9. Schneidvorrichtung (100) nach einem der Ansprüche 2 bis 8, **dadurch gekennzeichnet, dass** die erste Absaugeinrichtung (60) am Drehlager (31) angeordnet ist, wobei die erste Absaugeinrichtung (60) insbesondere im Bereich der Austrittsdüse (28) endet.

10. Schneidvorrichtung (100) nach einem der Ansprüche 2 bis 9, **dadurch gekennzeichnet, dass** an der Schneidvorrichtung (100), insbesondere am Drehlager (31), eine Spüleinrichtung (80) zum Spülen des Innenraums des Behälters (10) mit dem Spülgas angeordnet ist.

11. Schneidvorrichtung (100) nach Anspruch 10, **dadurch gekennzeichnet, dass** die zweite Absaugeinrichtung (81) als Bestandteil der Spüleinrichtung (80) ausgebildet ist.

12. Schneidvorrichtung (100) nach einem der Ansprüche 2 bis 11, **dadurch gekennzeichnet, dass** die Haltevorrichtung (50) zwei Greifer (51, 52) aufweist.

13. Schneidvorrichtung (100) nach einem der Ansprüche 2 bis 12, **dadurch gekennzeichnet, dass** die Umlenkeinrichtung (30) entlang der Längsachse (X) verstellbar ist.

14. Verfahren zum Konfektionieren eines faserbasierten Behälters (10), mit einer Schneidvorrichtung (100) nach einem der Ansprüche 1 bis 13, umfassend die Schritte:
- Bereitstellen eines faserbasierten Behälters (10) in der Haltevorrichtung (50),
- Bereitstellen eines Laserstrahls (21) des Schneidlasers (20)
- Abtrennen eines überschüssigen Überstandes (11) des faserbasierten Behälters (10) mittels des Laserstrahls (21), wobei zum Abtrennen des überschüssigen Überstandes (11) der faserbasierte Behälter (10) und der Laserstrahl (21) relativ zueinander bewegt werden, **dadurch gekennzeichnet, dass** der Laserstrahl (21) in Richtung einer Längsachse (X) oberhalb einer finalen Schnittfläche (12) positioniert und aktiviert wird und der Laserschnitt bis zu einer Schnittposition der finalen Schnittfläche (12) eine vertikale Bewegungskomponente aufweist.

15. Verfahren nach Anspruch 14, **dadurch gekennzeichnet, dass** der Laserstrahl (21) in einer Umlenkeinrichtung (30) geführt ist und diese zum Abtrennen des überschüssigen Überstandes (11) um die Längsachse (X) des faserbasierten Behälters (10) rotiert wird.

16. Verfahren nach Anspruch 14 oder 15, **dadurch gekennzeichnet, dass** der Laserstrahl (21) mittels einer Fokussieroptik (40) auf einen bestimmten Abstand zur Oberfläche des abzutrennenden überschüssigen Überstandes (11) fokussiert wird.

17. Verfahren nach einem der Ansprüche 14 bis 16, **dadurch gekennzeichnet, dass** nach Abschluss des Schnittes der finalen Schnittfläche (12) der Laserstrahl (21) vor dem Deaktivieren des Laserstrahls (21) in Richtung der Längsachse (X) über die finale Schnittfläche (12) bewegt wird und der Laserschnitt bis zur finalen Position, in welcher der Laserstrahl (21) deaktiviert wird, eine vertikale Bewegungskomponente aufweist.

18. Verfahren nach einem der Ansprüche 14 bis 17, **dadurch gekennzeichnet, dass** ein radialer Abstand einer Fokussieroptik (40) zu der Längsachse (X) gemäss einem behälterspezifischen Parameter initial eingestellt wird.

19. Verfahren nach Anspruch 18, **dadurch gekennzeichnet, dass** der behälterspezifische Parameter für jeden faserbasierten Behälter (10) individuell ermittelt wird.

20. Verfahren nach einem der Ansprüche 18 oder 19, **dadurch gekennzeichnet, dass** der radiale Abstand während des Abtrennvorgangs fortlaufend an eine Kontur des faserbasierten Behälters (10) angepasst wird.

21. Verfahren nach einem der Ansprüche 14 bis 20, **dadurch gekennzeichnet, dass** während des Abtrennvorgangs durch eine Spüleinrichtung (80) Spülgas in den faserbasierten Behälter (10) eingeblasen wird.

22. Verfahren nach einem der Ansprüche 14 bis 21, **dadurch gekennzeichnet, dass** während des Abtrennvorgangs Abluft aus dem faserbasierten Behälter (10) mit einer zweiten Absaugeinrichtung (81) und/oder aus dem Bereich einer Austrittsdüse (28) mit einer ersten Absaugeinrichtung (60) abgesaugt wird.

23. Verfahren nach Anspruch 15 sowie einem der Ansprüche 14 bis 22, **dadurch gekennzeichnet, dass** während des Abtrennvorgangs die Umlenkeinrichtung (30) mit Spülgas beaufschlagt wird.

24. Verfahren nach einem der Ansprüche 14 bis 23, **dadurch gekennzeichnet, dass** nach dem Abtrennvorgang der abgetrennte überschüssige Überstand (11) von der Schneidvorrichtung (100) mittels eines Abstreifrings abgestreift wird.

## Claims

1. A cutting device (100) for manufacturing a fiber-based container (10), wherein the cutting device (100) has a holding device (50) for holding the fiber-based container (10) and a cutting laser (20) for generating a laser beam (21), the laser beam (21) of the cutting laser (20) and the fiber-based container (10) being movable relative to one another in order to separate an excess projection (11) of the fiber-based container (10) by means of the laser beam (21), wherein a first suction device (60) for extracting vapors and dirt is arranged on the cutting device (30), **characterized in that** said device has a second suction device (81) for extracting the flushing gas from the interior of the container (10).

2. The cutting device (100) according to claim 1, **characterized in that** the cutting device (100) has a rotary bearing (31), a deflection device (30) for guiding the laser beam (21) being arranged on the rotary bearing (31) so that the deflection device (30) is rotatable about a longitudinal axis (X) of the fiber-based container (10).

3. The cutting device (100) according to either claim 1 or claim 2, **characterized in that** the cutting device (100) has focusing optics (40) for focusing the laser beam (21), this focusing optics (40) being in particular an integral part of the deflection device (30).

4. The cutting device (100) according to claim 3, **characterized in that** the focusing optics (40) is arranged at an angle of 85° to 95°, in particular at an angle of 89° to 91°, preferably perpendicularly, to the longitudinal axis (X), and radially spaced therefrom.

5. The cutting device (100) according to claim 4, **characterized in that** a radial distance between the focusing optics (40) and the longitudinal axis (X) is adjustable, in particular continuously adjustable.

6. The cutting device (100) according to any one of claims 2 to 5, **characterized in that** the laser beam (21) is guided through an outlet nozzle (28).

7. The cutting device (100) according to any one of claims 2 to 6, **characterized in that** the deflection device (30) has a plurality of deflection mirrors (22), a safety element (23) being arranged downstream of each deflection mirror (22) in the direction of incidence.

8. The cutting device (100) according to any one of claims 2 to 7, **characterized in that** the deflection device (30) is designed as a substantially closed system of individual tubes (24, 25, 26, 27).

9. The cutting device (100) according to any one of claims 2 to 8, **characterized in that** the first suction device (60) is arranged on the rotary bearing (31), the first suction device (60) ending in particular in the region of the outlet nozzle (28).

10. The cutting device (100) according to any one of claims 2 to 9, **characterized in that** a flushing device (80) for flushing the interior of the container (10) with the flushing gas is arranged on the cutting device (100), in particular on the rotary bearing (31).

11. The cutting device (100) according to claim 10, **characterized in that** the second suction device (81) being designed in particular as a component of the flushing device (80).

12. The cutting device (100) according to any one of claims 2 to 11, **characterized in that** the holding device (50) has two grippers (51, 52).

13. The cutting device (100) according to any one of claims 2 to 12, **characterized in that** the deflection device (30) is adjustable along the longitudinal axis (X).

14. A method for manufacturing a fiber-based container (10) using a cutting device(100) according to any one of claims 1 to 13, comprising the steps of:
- Providing a fiber-based container (10) in the holding device (50),
- Providing a laser beam (21) of the cutting laser (20),
- Separating an excess projection (11) of the fiber-based container (10) by means of the laser beam (21), wherein the fiber-based container (10) and the laser beam (21) are moved relative to one another in order to separate the excess projection (11), **characterized in that** the laser beam (21) is positioned and activated in the direction of the longitudinal axis (X) above a final cutting surface (12) and the laser cut has a vertical movement component up to a cutting position of the final cutting surface (12) .

15. The method according to claim 14, **characterized in that** the laser beam (21) is guided in a deflection device (30) and said device is rotated about the longitudinal axis (X) of the fiber-based container (10) in order to separate the excess projection (11).

16. The method according to either claim 14 or claim 15, **characterized in that** the laser beam (21) is focused by means of focusing optics (40) to a certain distance from the surface of the excess projection (11) to be separated.

17. The method according to any one of claims 14 to 16, **characterized in that** after completion of the cut of the final cutting surface (12), the laser beam (21) is moved in the direction of the longitudinal axis (X) over the final cutting surface (12) before the laser beam (21) is deactivated and the laser cut has a vertical movement component up to the final position in which the laser beam (21) is deactivated.

18. The method according to any one of claims 14 to 17, **characterized in that** a radial distance between focusing optics (40) and the longitudinal axis (X) is initially adjusted according to a container-specific parameter.

19. The method according to claim 18, **characterized in that** the container-specific parameter is determined individually for each fiber-based container (10).

20. The method according to either claim 18 or claim 19, **characterized in that** the radial distance is continuously adapted to a contour of the fiber-based container (10) during the separation process.

21. The method according to any one of claims 14 to 20, **characterized in that**, during the separation process, flushing gas is blown into the fiber-based container (10) by a flushing device (80).

22. The method according to any one of claims 14 to 21, **characterized in that**, during the separation process, exhaust air is extracted from the fiber-based container (10) by means of a second suction device (81) and/or from the region of an outlet nozzle (28) by means of a first suction device (60).

23. The method according to claim 15 and any one of claims 14 to 22, **characterized in that**, during the separation process, the deflection device (30) is supplied with flushing gas.

24. The method according to any one of claims 14 to 23, **characterized in that**, after the separation process, the separated excess projection (11) is stripped off the cutting device (100) by means of a stripping ring.

## Revendications

1. Dispositif de découpe (100) pour la fabrication d'un récipient à base de fibres (10), dans lequel le dispositif de découpe (100) présente un dispositif de support (50), destiné à tenir le récipient à base de fibres (10), et un laser de découpe (20) destiné à générer un faisceau laser (21), le faisceau laser (21) du laser de découpe (20) et le récipient à base de fibres pouvant (10) être déplacés l'un par rapport à l'autre pour séparer une saillie (11) excédentaire du récipient à base de fibres (10), au moyen du faisceau laser (21), un premier dispositif d'aspiration (60) étant installé sur le dispositif de découpe (100) pour aspirer des vapeurs et/ou des saletés, **caractérisé en ce que** le dispositif de découpe (100) présente un deuxième dispositif d'aspiration (81) pour aspirer un gaz de rinçage dans un espace intérieur du récipient à base de fibres (10).

2. Dispositif de découpe (100) selon la revendication 1, **caractérisé en ce que** le dispositif de découpe (100) présente un palier rotatif (31), un dispositif de déviation (30) étant prévu sur le palier rotatif (31) aux fins de guider le faisceau laser (21), de sorte que le dispositif de déviation (30) peut être mis en rotation autour d'un axe longitudinal (X) du récipient à base de fibres (10).

3. Dispositif de découpe (100) selon une des revendications 1 ou 2, **caractérisé en ce que** le dispositif de découpe (100) présente une optique de focalisation (40) destinée à focaliser le faisceau laser (21), ladite optique de focalisation (40) faisant notamment partie intégrante du dispositif de déviation (30).

4. Dispositif de découpe (100) selon la revendication 3, **caractérisé en ce que** l'optique de focalisation (40) est disposée en formant un angle de 85° à 95°, notamment un angle de 89° à 91°, de préférence perpendiculairement à l'axe longitudinal (X), et à distance radiale ce celui-ci.

5. Dispositif de découpe (100) selon la revendication 4, **caractérisé en ce qu'**une distance radiale de l'optique de focalisation (40) par rapport à l'axe longitudinal (X) est réglable et est notamment réglable de manière continue.

6. Dispositif de découpe (100) selon une des revendications 2 à 5, **caractérisé en ce que** le faisceau laser (21) est guidé à travers une buse de sortie (28).

7. Dispositif de découpe (100) selon une des revendications 2 à 6, **caractérisé en ce que** le dispositif de déviation (30) comporte plusieurs miroirs de déviation (22), un élément de sécurité (23) étant disposé à la suite de chaque miroir de déviation (22) dans le sens du rayonnement.

8. Dispositif de découpe (100) selon une des revendications 2 à 7, **caractérisé en ce que** le dispositif de déviation (30) est réalisé sous la forme d'un système sensiblement fermé de tubes (24, 25, 26, 27) individuels.

9. Dispositif de découpe (100) selon une des revendications 2 à 8, **caractérisé en ce que** le premier dispositif d'aspiration (60) est installé sur le palier rotatif (31), le premier dispositif d'aspiration (60) se terminant notamment dans la région de la buse de sortie (28).

10. Dispositif de découpe (100) selon une des revendications 2 à 9, **caractérisé en ce qu'**un dispositif de rinçage (80), destiné à rincer l'espace intérieur du récipient (10) avec le gaz de rinçage, est installé sur le dispositif de découpe (100), en particulier sur le palier rotatif (31).

11. Dispositif de découpe (100) selon la revendication 10, **caractérisé en ce que** le deuxième dispositif d'aspiration (81) est réalisé comme partie intégrante du dispositif de rinçage (80).

12. Dispositif de découpe (100) selon une des revendications 2 à 11, **caractérisé en ce que** le dispositif de support (50) présente deux préhenseurs (51, 52).

13. Dispositif de découpe (100) selon une des revendications 2 à 12, **caractérisé en ce que** le dispositif de déviation (30) peut être déplacé le long de l'axe longitudinal (X).

14. Procédé de fabrication d'un récipient à base de fibres (10) avec un dispositif de découpe (100) selon une des revendications 1 à 13, comprenant les étapes suivantes :
- préparation d'un récipient à base de fibres (10) dans le dispositif de support (50),
- mise à disposition d'un faisceau laser (21) du laser de découpe (20),
- séparation d'une saillie (11) excédentaire du récipient à base de fibres (10) au moyen du faisceau laser (21), le récipient à base de fibres (10) et le faisceau laser (21) étant déplacés l'un par rapport à l'autre pour séparer la saillie (11) excédentaire, **caractérisé en ce que** le faisceau laser (21) est positionné et activé au-dessus d'une surface de coupe (12) finale, dans le sens d'un axe longitudinal (X), et la découpe au laser présente une composante de mouvement verticale jusqu'à une position de découpe de la surface de coupe (12) finale

15. Procédé selon la revendication 14, **caractérisé en ce que** le faisceau laser (21) est guidé dans un dispositif de déviation (30) et que celui-ci est mis en rotation autour de l'axe longitudinal (X) du récipient à base de fibres (10), pour séparer la saillie (11) excédentaire.

16. Procédé selon la revendication 14 ou 15, **caractérisé en ce que** le faisceau laser (21) est focalisé à l'aide d'une optique de focalisation (40) sur une distance définie par rapport à la surface de la saillie (11) excédentaire devant être séparée.

17. Procédé selon une des revendications 14 à 16, **caractérisé en ce que**, à la fin de la découpe de la surface de coupe (12) finale, avant la désactivation du faisceau laser (21), le faisceau laser (21) est déplacé sur la surface de coupe (12) finale dans le sens de l'axe longitudinal (X), et que la découpe au laser présente une composante de mouvement verticale jusqu'à la position finale dans laquelle le faisceau laser (21) est désactivé.

18. Procédé selon une des revendications 14 à 17, **caractérisé en ce qu'**une distance radiale d'une optique de focalisation (40) par rapport à l'axe longitudinal (X) est réglée initialement selon un paramètre spécifique au récipient.

19. Procédé selon la revendication 18, **caractérisé en ce que** le paramètre spécifique au récipient est déterminé individuellement pour chaque récipient à base de fibres (10).

20. Procédé selon une des revendications 18 ou 19, **caractérisé en ce que** la distance radiale est adaptée en continu à un contour du récipient à base de fibres (10), pendant l'opération de séparation.

21. Procédé selon une des revendications 14 à 20, **caractérisé en ce que**, pendant l'opération de séparation, un gaz de rinçage est soufflé dans le récipient à base de fibres (10) par un dispositif de rinçage (80).

22. Procédé selon une des revendications 14 à 21, **caractérisé en ce que**, pendant l'opération de séparation, l'air évacué est aspiré du récipient à base de fibres (10) avec un deuxième dispositif d'aspiration (81), et/ou de la zone d'une buse de sortie (28), avec un premier dispositif d'aspiration (60).

23. Procédé selon la revendication 15 et selon une des revendications 14 à 22, **caractérisé en ce que**, pendant l'opération de séparation, le dispositif de déviation (30) est soumis à l'action du gaz de rinçage.

24. Procédé selon une des revendications 14 à 23, **caractérisé en ce que**, après l'opération de séparation, la saillie (11) excédentaire séparée est retirée du dispositif de découpe (100) à l'aide d'une bague racleuse.
